# EUROPEAN PATENT APPLICATION

(11) **EP 2 565 754 A1**
(43) Date of publication of application: **06.03.2013**
(21) Application number: 11306099.0
(22) Date of filing: 05.09.2011
(51) Int. Cl.: G06F 3/041, G06F 3/044, G06F 3/048, G06F 3/042

(54) **Process for magnifying at least a part of a display of a tactile screen of a terminal**

(71) Applicant: Alcatel Lucent, 75007 Paris (FR)
(72) Inventor: Toubiana, Vincent, 91620 Nozay (FR); Jabaud, Philippe, 91620 Nozay (FR); Le Berre, Olivier, 91620 Nozay (FR)
(74) Representative: Sayettat, Julien Christian

(57) **Abstract**

Process for magnifying at least a part of a display of a tactile screen (1) of a terminal (2), said process providing for:
- detecting at least one finger of the user of said terminal before said finger touches said screen;
- determining the position of said detected finger in relation to the screen (1);
- determining the part (8) of the screen (1) that is positioned opposite said detected finger by means of said position;
- magnifying the display of said part.

## Description

The invention relates to a process for magnifying at least a part of a display of a tactile screen of a terminal and to a terminal comprising a tactile screen and means for implementing such a process.

For designers of applications adapted to mobile terminals such as smartphones, it is important to propose for such an application a graphical user interface (GUI) which allows good interactions with the user of such a terminal while being adapted to the small sized tactile screen of said terminal.

Indeed, a size reduction is crucial for such terminals because they should be able to fit in a pocket. Moreover, a small sized tactile screen is not particularly adapted to support quick interactions of the user with the graphical interface of an application that is displayed on said screen.

For example, most of those terminals propose a numerical keyboard which is generally displayed on half of the screen of said terminals and has small sized interactive buttons, called keys. However, with such a keyboard, the error rate is high, notably for a user who does not use said keyboard often, a user with large fingers, a user who used its toes to type on said keyboard, or a user, such an elderly, which does not distinguish well the keys.

For simplifying text typing and decreasing the error rate, some solutions have already been proposed. In particular, such solutions have been implemented on the internet Operating System (iOS) of the Apple® Iphone®.

Among those solutions, a pop-up key system provides for displaying on the tactile screen a pop-up window just above the key that the user have just pressed, thus facilitating error detection and supporting fast error correction.

Besides, a magnifying loupe system allows a user to zoom on a part of the tactile screen by keeping up a pressure on it with his finger. By moving this finger, the user can further zoom on any part of the screen and move a cursor on the precise part of the text he wants to correct.

Moreover, the text completion system, automatic or not, allows to user to avoid typing a full word and thus to avoid mistakes while increasing his typing speed.

Otherwise, other types of keyboards, such as the Swype® solution implemented in the operating system of the Android® society, provide the user with a faster way for typing a text with continuous touches.

However, even if those solutions are efficient to correct typing errors, they are not adapted to prevent them, notably because they are not adapted to magnify the usable part of the tactile screen. Hence, with those solutions, the user still has to type his text by means of a keyboard with small sized keys.

The invention aims to improve the prior art by proposing notably a process which provides for magnifying the usable part of an interface that is displayed on a screen of a mobile terminal such as a smartphone, in order to reduce the error rate without reducing the number of displayed keys of said interface.

For that purpose, and according to a first aspect, the invention relates to a process for magnifying at least a part of a display of a tactile screen of a terminal, said process providing for:
- detecting at least one finger of the user of said terminal before said finger touches said screen;
- determining the position of said detected finger in relation to the screen;
- determining the part of the screen that is positioned opposite said detected finger by means of said position;
- magnifying the display of said part.

According to a second aspect, the invention relates to a terminal comprising a tactile screen, said terminal further comprising means for detecting at least one finger of the user of said terminal before said finger touches said screen, said terminal further comprising an application which comprises means for determining the position of said detected finger relative to the screen, means for determining the part of the screen that is positioned opposite said detected finger by means of said position and means for magnifying the display of said part.

Other aspects and advantages of the invention will become apparent in the following description made with reference to the appended figures, wherein:
- figure 1 represents schematically a terminal on which a training step of the process according to the invention is running;
- figure 2 represents schematically a terminal on which a step of the process according to the invention for determining a part of the screen opposite a finger of the user is running.

In relation to those figures, a process for magnifying at least a part of a display of a tactile screen 1 of a terminal 2 is described below.

The terminal 2 can be any digital device comprising a tactile screen 1, such as a mobile phone, a desk phone, or a tablet. In the figures, the terminal 2 is a smartphone. Moreover, the display can be a numeric keyboard or any other graphical user interface (GUI) of an application embedded in said terminal.

The process provides for detecting at least one finger of the user of the terminal 2 before said finger touches the screen 1. To do so, the terminal 1 comprises means for such detection.

In a non represented embodiment, the means for detecting comprise a motion recognition engine integrated in the terminal 2. For example; the motion recognition engine can be a motion tracking system like the Kinect® system proposed by Microsoft®, or any other motion tracking system, such as the one proposed by the Crunchfish® society for smartphones and tablets, which is presented in the article available at the address http://www.slashgear.co/kinect-style-motion-tracking-for-smartphones-tablets-promises-crunchfish-video-25136168/, and wherein the finger is detected through its color and/or its form.

In another non represented embodiment, the means for detecting comprise a Projected Capacitance Touchscreen (PCT) technology based pattern embedded on the tactile screen 1.For example, the TrueTouch® solution from the Cypress Semiconductor® corporation, which is described in the article available at the address http://www1.cypress.com/?id=1938&rID=39280, proposes a capacitive tactile screen which is sensitive enough to detect the magnetic field of a finger when said finger moves towards said screen.

In the represented embodiment, the means for detecting comprise a capturing device 3, such as a front camera classically embedded in current mobile terminals, said device being adapted to capture at least one picture of the finger. In particular, for detecting the finger with a great accuracy, the capturing device 3 can be a high frame rate camera adapted for tracking in three dimensions the motion of a finger in relation to the terminal 1, such as the camera presented in the article "In-air Typing Interface for Mobile Devices" available at the address www.k2.t.u-tokyo.ac.jp/vision/typing system/index-e.html, and disclosed notably in the article "Vision-based Input Interface for Mobile Devices with High-speed Fingertip Tracking", (HIROBE and AL, 22nd ACM Symposium on User Interface Software and Technology UIST2009, Victoria, 2009.10.5) which is hereby incorporated by reference.

In particular, the means for detecting presented in the above-mentioned article comprise an engine that is adapted to recognize the form of a finger or of the whole hand in images captured by the high frame rate camera 3 and to isolate the form of said finger from the background of said images, so as to facilitate the tracking of said finger.

In the embodiment shown, the capturing device 3 should be oriented so as to capture a finger of said user which moves closed to the tactile screen 1, contrary to usual front cameras embedded in mobile terminals, which are classically oriented towards the face of the user so as to capture pictures of said face. To do so, the capturing device 3 can be adjustable so as to orientate its capture area towards the screen 1.

In an alternative solution, the capturing device 3 can be equipped with an adjustable and retractable mirror in order for the user to change the capture area of said device. Thus, for implementing the process, the terminal 2 requires only one hardware modification. Moreover, the device 3 is adapted to capture a picture of the reflection of the finger on the screen 1.

The process further provides for determining the position of the detected finger in relation to the screen 1. In particular, that position is determined by an analysis of the captured picture of the finger. Moreover, such an analysis is particularly improved when the device 3 is oriented towards the screen 1, because the scope of the device 3 is considerably reduced and thus the position of the finger can be quickly determined. Furthermore, the analysis is even more efficient and faster when the captured picture comprises the reflection of the finger on the screen 1.

To do so, the terminal 2 comprises an application which comprises means for determining such a position, said means being adapted to analyze the captured picture of the finger for calculating at least one coordinate of said finger for determining said position.

In particular, and as described in the article from HIROBE and AL, these means for determining can use the isolated form of the finger on each captured picture for determining the position of said finger in relation to the screen 1. To do so, these means for determining are adapted to detect the transformation of the isolated form between two consecutive images.

Indeed, the finger, especially its tip, moves in relation to the screen 1 in three-dimensional space and its form on the captured images is transformed in various ways. This transformation mainly consist of translation along the plane perpendicular to the optical axis of the camera 3, rotation around said optical axis and scale change of said form, which is related to the distance from said camera. Therefore, the transformation of the form of the fingertip can be represented by the parameters (tₓ, t_{y}, s, θ)^{T}, wherein tₓ and t_{y} are translation amounts, s is a scale amount and θ is a rotation amount.

Besides, the means for determining the position comprise a heuristic that implements a function for calculating the coordinate. According to an embodiment, the function is adapted to measure the size of the finger on the captured picture for computing the distance D between said finger and the capturing device 3 as a coordinate of said finger.

In particular, as described in the article from HIROSE and AL, the function is adapted to compute the distance D from the scale amount s. Thus, the function uses the results of the tracking of the finger and the estimated distance D to calculate the coordinates (x, y)^{T} of the finger in the plane parallel to the screen 1.

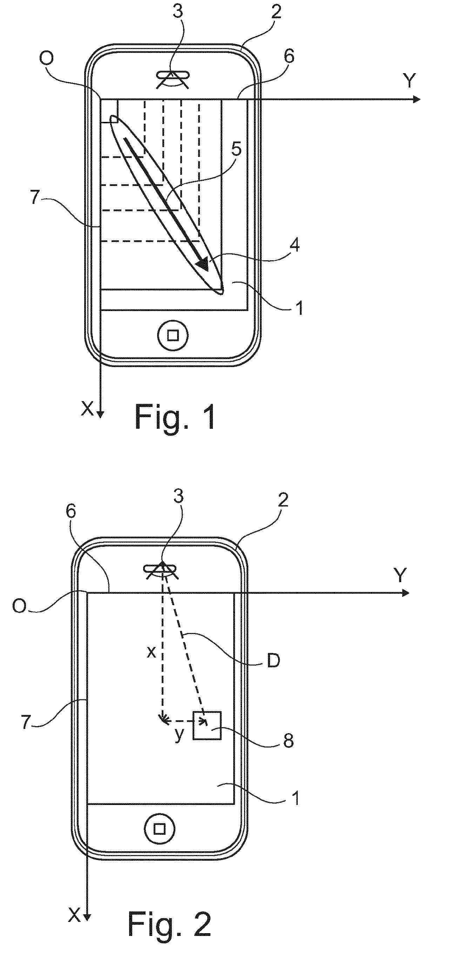

Moreover, the function can be calibrated by the user. To do so, the heuristic can implement a training step for allowing the user to calibrate the function. In relation to figure 1, the heuristic is adapted to display a pattern 4 on the screen 1 during the training step, the user following said pattern with his finger along the arrow 5. Thus, during the movement of the finger, the device 3 captures several pictures of said finger, the heuristic further being adapted, for each of said pictures, to measure the size of the finger, to evaluate the distance D and to associate said distance to said size for calibrating the function.

Besides, the function can be adapted to calculate other coordinates for determining the position of the finger, such as an abscissa and/or an ordinate and/or an height of said finger in a referential corresponding to a plan parallel to the screen 1, said referential having an origin point O localised in the upper left corner of said screen, an ordinate axis Y along the upper side 6 of said screen, an abscissa axis X along the left side 7 of said screen and an height axis orthogonal to the plan of said screen.

In particular, the function can be adapted to evaluate the ordinate of the finger directly from the picture captured by the device 3, for example by measuring the lateral distance y between said finger and the middle of said picture, said distance being defined as the ordinate of said finger.

Moreover, the coordinate can comprise the distance h between the detected finger and the screen 1 (not shown on the figures). Thus, the means for determining the position of the finger, notably the function of the heuristic of said means, can be adapted to calculate such a distance h as a coordinate of the detected finger, for example by measuring on the captured picture the vertical distance between the tip of said finger and the bottom of said picture, said bottom corresponding to the position of the screen 1.

In particular, the function can be adapted to calculate the height z of the detected finger (not shown on the figures) as a coordinate of said finger, for example by using the distance D between said finger and the device 3 and the distance h between said finger and the screen 1.

Thus, started from the above mentioned coordinates D, y, z, the function can be adapted to calculate the abscissa x of the detected finger as a coordinate of said finger, for example by using the formula x= (D³-y³-z³)^{1/3}.

The process further provides for determining the part 8 of the screen 1 that is positioned opposite the detected finger by means of the position of said finger. To do so, the application of the terminal 2 comprises means for determining such a part 8, notably by using at least one of the coordinates x, y, z, h, D of the finger, especially the distance h between the tip of said finger and the screen 1, which corresponds to the distance between said tip and the part 8.

The process further provides for magnifying the display of the part 8. To do so, the application of the terminal 2 comprises means for magnifying the display of the part 8, said means implementing a function which is adapted for such a magnifying.

When the display of the screen 1 is a keyboard, the display of the part 8 comprises at least one key of said keyboard towards which the user is moving his finger, notably for pressing it. Thus, by magnifying the keys of the part 8, the process allows to highlight the keys interesting the user of the terminal 2 from other keys of the keyboard without requiring the user keeping his finger in contact with said part, which permits to magnify the interesting keys quickly and with a reduced error rate.

In particular, as the detected finger moves relative to the screen 1, the process further provides for determining each instantaneous position of said finger in relation to said screen and for determining and magnifying each part of the display that is positioned opposite said instantaneous position. To do so, the means for determining the position of the finger are adapted to determine each instantaneous position, the means for determining the part 8 further comprising a heuristic that is adapted for determining each part 8 that is positioned opposite said instantaneous position, the magnifying function further being adapted to magnify the display of said part.

For example, this heuristic can be adapted for calculating a directional vector of the finger from the present instantaneous position of the finger at the present time and from the preceding instantaneous position of said finger at the preceding time, the heuristic further being adapted to estimate the consecutive instantaneous position of the finger from said vector for determining the part 8 of the screen 1 towards which the user is moving his finger. Thus, the display of the determined part 8 is magnified by the magnifying function.

As the display of the screen 1 is a keyboard, the heuristic can be adapted to take into account other parameters than the instantaneous positions of the finger for determining the key towards which the user is moving said finger, such as the orientation of the screen 1 and/or the orientation of the displayed keyboard and/or the position of each key on said keyboard. Moreover, as the user has just pressed a key on the keyboard, the heuristic can be adapted to rely on statistical analysis of typed texts for precising the determination of the key which is likely to be the next one to be pressed by the user.

Besides, as the process provides for magnifying the display of the determined part 8, it provides for magnifying all the keys of said part, which permits to counterbalance the possible estimation errors of the heuristic.

In particular, the magnifying function can be adapted to magnify the display of the part 8 at a size that depends from the distance h between the finger and said part. Indeed, as the user moves his finger closer to a key in the part 8, the probability that said user would press said key increases. Thus, the size of the key increases as the distance h decreases, until said distance becomes zero, so that said key returns to its normal size.

On the contrary, as the user moves his finger away from a key of the part 8, the distance h increases and the size of said key decreases until reaching the normal size of said key. Moreover, the magnifying function can be adapted to decrease quickly the size of the display of a part 8 as the finger is removed from said part, so that the user can easily move said finger to a next part 8 for pressing another key.

Besides, the magnifying function can be adapted to increase the magnification of a particular key among the magnified keys of the part 8, for example if said key has been identified by a statistical analysis of the heuristic as the most likely to be pressed by the user.

Moreover, when the user uses several fingers to type a text on the keyboard, the process provides for magnifying the displays of each of the parts 8 being positioned opposite said fingers. In particular, the process can provide for evaluating which finger is most likely to be used next, for example by comparing the coordinates of the position of said fingers for choosing the finger presenting the smallest distance from the screen 1, and for increasing the magnification of the display of the part 8 opposite said finger.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for magnifying at least a part of a display of a tactile screen (1) of a terminal (2), said process providing for:
- detecting at least one finger of the user of said terminal before said finger touches said screen;
- determining the position of said detected finger in relation to the screen (1);
- determining the part (8) of the screen (1) that is positioned opposite said detected finger by means of said position;
- magnifying the display of said part.

2. Process according to claim 1, **characterized in that** the finger is detected by means of a motion recognition engine integrated in the terminal (2).

3. Process according to claim 1, **characterized in that** the finger is detected by means of a Projected Capacitance Touchscreen PCT technology based pattern embedded on the tactile screen (1).

4. Process according to claim 1, **characterized in that** the finger is detected by means of a capturing device (3) integrated in the terminal (2), said device further capturing at least one picture of said finger, said captured picture being further analyzed in order to calculate at least a coordinate (x, y, D) of said finger for determining the position of said finger.

5. Process according to claim 4, **characterized in that** the coordinate (x, y, D) is calculated by means of a function that is calibrated by the user.

6. Process according to claim 4 or 5, **characterized in that** the coordinate comprises the distance between the detected finger and the part (8) of the screen (1) opposite said finger, the display of said part being magnified at a size that depends from said distance.

7. Process according to any of claims 1 to 6, **characterized in that**, as the detected finger moves relative to the screen (1), it further provides for determining each instantaneous position of said finger tin relation to the screen (1) and for determining and magnifying each part of the display that is positioned opposite said instantaneous position.

8. Terminal (2) comprising a tactile screen (1), said terminal further comprising means for detecting at least one finger of the user of said terminal before said finger touches said screen, said terminal further comprising an application which comprises means for determining the position of said detected finger in relation to the screen (1), means for determining the part (8) of the screen (1) that is positioned opposite said detected finger by means of said position and means for magnifying the display of said part.

9. Terminal (2) according to claim 8, **characterized in that** the means for detecting comprise a motion recognition engine.

10. Terminal (2) according to claim 8, **characterized in that** the means for detecting comprise a Projected Capacitance Touchscreen PCT technology based pattern that is embedded on the tactile screen (1).

11. Terminal (2) according to claim 8, **characterized in that** the means for detecting comprise a capturing device (3) adapted to capture at least one picture of the finger, the means for determining the position of said detected finger further being adapted to analyze said captured picture for calculating at least one coordinate (x, y, D) of said finger for determining said position.

12. Terminal (2) according to claim 11, **characterized in that** the means for determining the position of the detected finger comprise an heuristic that implements a function for calculating the coordinate (x, y, D), said heuristic further implementing a training step for allowing the user of said terminal to calibrate said function.

13. Terminal (2) according to claim 11 or 12, **characterized in that** the means for determining the position are adapted to calculate the distance between the detected finger and the part (8) of the screen opposite said finger as a coordinate of said detected finger, the means for magnifying further implementing a function that is adapted to magnify the display of said part at a size that depends from said distance.

14. Terminal (2) according to any of claims 8 to 13, **characterized in that**, as the finger moves towards the screen (1), the means for determining the position of the finger are adapted to determine each instantaneous position of said finger in relation to the screen (1), the means for determining the part (8) of the screen further comprising a heuristic that is adapted for determining each part (8) of the screen that is positioned opposite said instantaneous position, the means for magnifying further being adapted to magnify the display of said part.
